# EUROPEAN PATENT APPLICATION

(11) **EP 1 968 206 A1**
(43) Date of publication of application: **10.09.2008**
(21) Application number: 08102037.2
(22) Date of filing: 26.02.2008
(51) Int. Cl.: H04B 3/54

(54) **Control signal transmission**

(30) Priority: 27.02.2007 GB 0703752
(71) Applicant: Crockford, Christopher, Colchester Essex CO3 3UN (GB); Jobling, Timothy, Sutton on Hull Yorkshire Hull, HU7 4YY (GB)
(72) Inventor: Crockford, Christopher, Colchester Essex CO3 3UN (GB); Jobling, Timothy, Sutton on Hull Yorkshire Hull, HU7 4YY (GB)
(74) Representative: Sanderson, James L.C.

(57) **Abstract**

The present invention provides a method and apparatus for transmitting control signals across a power circuit between a controller (48) and one or more slave unit (52, 53) that is connected to the power circuit (41). The method includes the steps of receiving from the controller a control signal in any format, and translating that into an Ethernet format signal. This is then modulating onto the power signal feeding the slave unit, and then filtered from the power signal by the slave unit. The Ethernet signal is translated back to the format generated by the controller; and is sent by a separate circuit to the slave unit to control its operation. The apparatus comprises an encoder (47) associated with the controller (48) to receive the control signal and translate and modulate that signal in an Ethernet form onto the power signal. It further comprise a decoder (50,51) with each slave unit (52,53) that receives and demodulates the Ethernet signal from the power signal and translates it back to the same format as originally transmitted by the controller, for onward transmission to the slave unit by means other than the power circuit.

## Description

The present invention relates to a method of transmitting control signals across a power circuit from a controller to one or more a slave unit. It further relates to apparatus for transmitting a control signal in such a way. It is particularly suited to the transmission of display control signals.

Existing technologies such as X10, Homeplug^{™} Alliance/Standard, BPL (Broadband over Power Lines) etc. allow the transfer of Ethernet data over mains power cables. These are useful but do not satisfy all desired functionality and requirements.

The Homeplug system is intended to establish home computer network, and utilizes an Ethernet to mains bridging system, but this requires equipment that is to be compatible with the Ethernet system which is not often the case with many types of equipment and certainly not older display equipment. The terms "lighting" or "luminary device" or "display device" as used herein refer to equipment such as light fittings and display apparatus whose operation is desirable controlled to provide a variety of visible effects. The term includes led light systems that can display video pictures if fed video signals that have been converted into individual LED values via DMX (or any similar serial control protocol).

The aim of the present is to provide a method and apparatus for transferring an array of control data (including values of variable or fixed length) from a controller such as a computer coupled to a common power supply to a data end point or slave unit (a data receiving device) also present on the same common power supply.

The present invention aims to provide a system by which data may be widely transmitted on power circuits from a control device ("controller") to affect control of remote items (slaves) that are normally equipped only to be controlled by a separate control circuit. The rationale behind such a data transfer is to enable the remote control of slave units especially luminary devices or display systems without the expense of running a control circuit between the controller and each slave unit.

Therefore according to the present invention there is provided a method of transmitting control signals across a power circuit from a controller that generates a control signal to a slave unit that is connected to the power circuit and operates in response to the control signal, the method comprising the steps of:
a) receiving from the controller a control signal in any particular format;
b) translating that signal into an Ethernet format signal;
c) overlaying and modulating that Ethernet signal onto the power signal on the power circuit feeding the slave unit;
d) filtering and demodulating the Ethernet signal from the power signal received from the power circuit at a remote location;
e) translation of the Ethernet signal back to the format received at step a);
f) transmission of the original format control signal by a separate circuit to the slave unit, thereby to control its operation.

The format of the signal received in step a) and transmitted at step f) may take any form as this is translatable by the present invention into an Ethernet signal format for transmission over the power circuit - so the signal received would not already be an Ethernet signal. The present invention is intended primarily for the control of luminary and display devices and proprietary formats used include DMX (Digital Multiplex), ACN (Architecture for Control Networks), RS232 and RS485, as well as the established electronic controlling mechanisms such as PWM (Pulse Width Modulation), PAM (Pulse Amplitude Modulation) and controllable current systems. It is also possible that the present invention will as a first step convert the incoming format into DMX (or similar protocol) before the onward conversion to an Ethernet format.

The present invention has been found to be particularly well suited to the control of visual display or luminary/lighting apparatus. It is therefore preferred that the slave unit is a display or lighting device. It is also possible that several slave units are provided on the same power circuit and that the controller can control some or all of these. All such slave units may be display or lighting devices. In the control of multiple slave units control may be selectively affected on one unit or simultaneously on groups of some units or all of the units.

It is preferred that an encoder unit is provided. This encoder is connected to the power circuit and the controller, and carries out steps a) to c). Likewise it is desirable that a decoder unit is provided, which decoder is connected to the power circuit and the slave unit and carries out steps d) to e). Such an encoder and decoder can be essentially identical and configured to act either as a sender and/or receiver of data dependant on requirements.

Communication between a controller and a slave unit may preferably be two-way, so that feed back from the slave may be provided. In terms of physical hardware an encoder unit or decoder unit which integrate the control signal on the power cable, may be constructed from a transceiver unit, such that in different employment usages the same physical hardware may be used for either encoding and/or decoding.

Additional data, ie more data than is usually generated by the controller, can be applied to the control signal by a manipulation of the control signal prior to step c). Appropriate decoding of this is carried out in step d) to allow the user additional control functionality over that which is provided by the original control signal. Such additional functionality may include the ability to readdress the control signal to a different destination or destinations; and enhanced control of the operation of the device etc.

When several slave units are on a common power circuit; the control signal may include an identifier specific to one or more of those slave unit, to ensure that only the or each correct slave unit identified responds to the commands intended for that one or more slave unit. This identifier can be generated by the encoder and specific to a decoder or can be generated by the controller, and specific to the slave.

The translated control signal is stored in a memory after step a) and or after step d). This can assist in any processing of data to include additions as well as being useful in the translation of signals to and from the native format of the controller and slave unit.

According to a second aspect of the present invention there is provided apparatus for transmission of control signals across a power circuit from a controller that generates a control signal to a remote slave unit that is connected to the power circuit and operates in response to the control signal, the apparatus comprising:
- an encoder in or adjacent the controller having an input adapted to receive the control signal in a particular format; a translator that changes that signal into an Ethernet signal format, and a modulator that modulates and overlays that Ethernet signal onto the power signal of the power circuit connected thereto; and
- a decoder in or adjacent the slave unit that receives the power signal and includes a demodulator to filter and demodulate the Ethernet signal from the power signal; a translator that converts the Ethernet signal back to the same format as originally transmitted by the controller, and output means to transmit the original format control signal to the slave unit by means other than the power circuit, thereby to control its operation.

Such apparatus is able to perform a method according to the first aspect of the present invention.

The encoder and decoder can be separate units that are connected to a power circuit adjacent to the controller and slave units so they may be wired separately thereto. Also the encoder and or decoder can be integrated it the body of a controller or slave unit respectively as this allows a single connection to the power circuit. However within each the control signal would still be separately fed to or from the encoder or decoder by a connection other than the power circuit. The decoder and/or encoder may be provided with a memory adapted to store electronically the control signal or aspects thereof.

One or more controller may be adapted to control one or more slave units on the same power circuit. With multiple slave units a separate decoder may be associated with each slave unit, or a single decoder may be associated with several slave units.

The encoder and decoder are preferably formed from two equivalent units that are each adapted to perform either function as required. The parts of such encoders and decoders that send or receive signals may take the form of a transceiver able to perform both functions. Each decoder may have a specific identifier (numerical or otherwise); which may be used to ensure a control signal is only relayed to a slave unit connected to the specific decoder. This allows a distributed signal to be acted upon only by the slave unit(s) for who the signal is intended. The controller may be able to assign, after installation unique address information to each slave unit.

According to a third aspect of the present invention there is provided an encoder-decoder unit for transmitting and receiving control data over a power circuit to a like device, the encoder-decoder comprising an interface connector that connects to a controller to receive therefrom commands in a proprietary format or a slave unit to send thereto commands in a proprietary format; a translator subsystem that converts an incoming control signal from the proprietary format to an Ethernet format, or converts a control signal in an Ethernet format to a proprietary format; and a modulator/demodulator that embeds Ethernet frames on the power circuit or decodes such Ethernet frames from the power circuit.

By utilizing the present invention the benefit of routing such control data over existing mains power cabling negates the need to supply the slave units with an auxiliary dedicated data control cable. In such a manner it is possible to enable luminary, or display devices, that are only equipped to receive their control data via a dedicated and separate control cable, to receive their data via the same mains power cable network that is powering the device.

In such a manner the encoder-decoder reads in the data, as if it were in fact replacing the dedicated data control cable. Once the encoder has received the data from the data source, it is stored and then forwarded, (with optional processing, to allow the user additional control functionality, such as re-addressing the data, manipulating the data etc.) to the mains modulation subsystem, which then makes the data available for transfer over the local mains power system. The data is now available on the local mains power cabling for reception by one or more decoders configured to receive such data.

The decoder reads the data from mains power cabling in the form of the modulated signal. The signal is then decoded, (including the steps of demodulation and translation) stored and then forwarded, (with optional processing, to allow the user additional control functionality, such as re-addressing the data, manipulating the data etc.) in a data format that would normally be understood by the slave unit but which cannot be sent over the mains. This data is then transferred to the slave unit by a conventional and dedicated data control cable in a specified proprietary format.

This invention consists of a series of links/processing stages integrated into a single device through which the control data passes as part of the data processing cycle. The stages through which the data passes are: 1) a back end subsystem allowing the translation and modulation of the data, which has been manipulated into packet form, to and from the mains voltage cabling; 2) a processing subsystem providing remote or local manipulation of the control data; and 3) a front end subsystem providing final format conversion, such that the data may be presented to the device to be controlled in a suitable format and fashion.

The encoder-decoder provides a single unit, either stand-alone or embedded within other equipment, which consists of a mains AC electricity supply input and one or more data inputs or outputs, for protocols such as DMX, ACN etc. One or more such encoder-decoder unit acting as the encoder is equipped to receive control data from any form of control console, be it a separate stand-alone dedicated device, or from a computer system that receives the data into the system. The control data will be encoded into Ethernet frames which will then be modulated onto the mains (power) cables to allow transmission to one or more remote encoder-decoder unit acting as a decoder and equipped to decode the Ethernet frames from the mains cable and translate them back to the required data format.

It is possible that the encoder - decoder pair will also be required to route extra data back across the communications path. Such data may include but will not be restricted to, a sub address naming scheme other than the Ethernet MAC (Media Access Control) address or IP (Internet Protocol) address, operational hours of the decoder, operating temperature, colour output of the luminary device, remote vision, or audio and any other such data as required. To facilitate this, a command sent via the controlling encoder through a standard control protocol, might trigger a response to be sent back from the decoder at the end of the line, via the Ethernet layer. It is envisaged that such a mechanism might facilitate an automatic numbering system for decoding units, to aid the routing of individual data to individual units. Such a numbering system might utilise MAC or IP addressing, or a derivative of these values, (e.g. hashing or some other mathematical operation applied to them). The return data path, through the Ethernet Layer may also include status information about the number of dropped packets caused through interference on the mains line.

The present invention has a number of benefits, such as, but not limited to: obviating the need for dedicated control cabling; facilitating data transfer over the mains power cable that is supplying said mains power to the slave unit; and the construction of an intelligent data network using purely the mains power cabling that supplies all devices commonly supplied by such a power system.

In such a manner installers and manufacturers of luminary and display equipment may include the invention within their devices, or couple their devices to such a system to deliver the requisite data for their equipment to function without the requirement for a dedicated control cable.

In order that it may be better understood, but by way of example only, an embodiment of the present invention will now be described in more details with reference to the accompanying drawings in which:
**Figure 1** is flow diagram representing the steps involved in the operation of the present invention; and
**Figure 2** **i**s a schematic representation of one embodiment of apparatus according to the present invention.

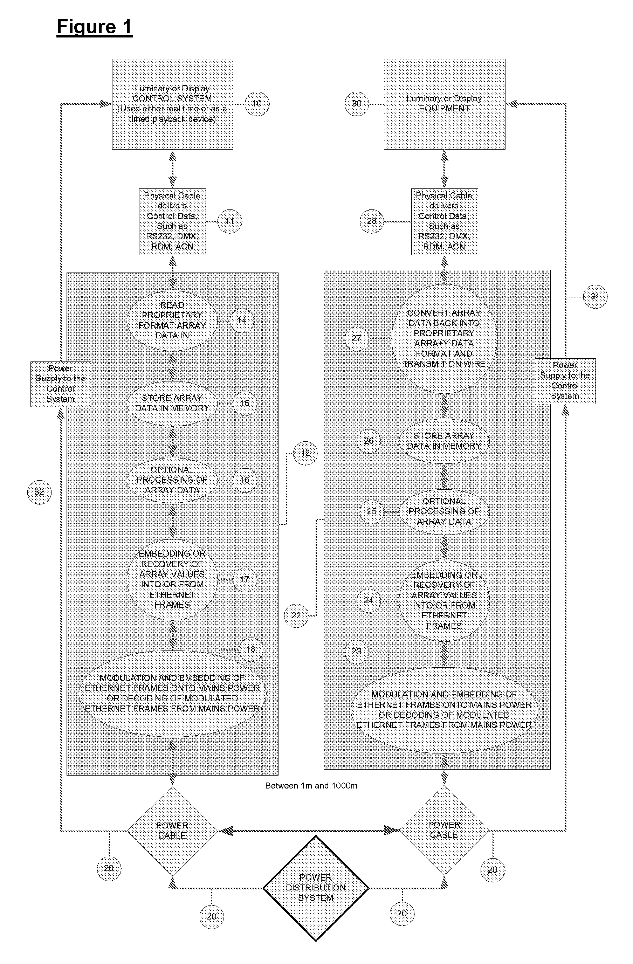

Figure 1 shows a schematic representation of the steps involved in the operation of a method according to the present invention. A luminary (lighting) or display control system 10 operates either in real time or as a timed playback device and supplies control data. This would have been designed to connect directly by a dedicated able to a device to be controlled, but instead it supplies the data, via a physical cable 11, to an encoder 12. As represented by step 14 the encoder receives the array data, which is in any format, and reads it in. This array data is temporarily stored at step 15 in a memory provided in the encoder. At step 16 optional processing of this stored array data is carried out in order to provide enhanced functionality, as previously discussed. At step 17 the array data is translated and embedded into Ethernet frames which are then modulated and overlaid onto the mains power signal at step 18. This altered mains power signal is transmitted via the power cables 20 through a power distribution system until it reaches a decoder unit 22.

Within the decoder unit, at step 23, the Ethernet frames are decoded and demodulated from the mains power supply. These demodulated Ethernet frames are recovered and reassembled at step 24 prior to optional processing of the array data at step 25. This processing can recover and act upon the additional data imported by the encoder at step 16 to provide enhanced functionality over what the controller can provide. The array data is stored at step 26 for as long as required prior to conversion back at step 27 into the format as originally generated. The processing of the data by the encoder will ensure that the decoder knows what the original format was.

Once translated back into the proprietary data format the data is transmitted by cable 28 to luminary or display equipment 30. The translation of the data to the proprietary format can occur prior to storage at step 16. In response to the control data the luminary or display equipment 30 operates appropriately under the power of mains received via mains cable 31. The power system comprising power cables 20 and 31 also includes a power supply 32 supplying power to the luminary or display control system 10.

In the case where several decoders are provided, the signal transmitted may not be for all to act upon, but all will receive it. To ensure the correct operation of only the desired luminary or display equipment the data signal will have an identifier. This may be part of the original signal from the control system 10, which is passed to all luminary or display equipment for them to act or not as appropriate. Alternatively, the signal when processed by the encoder at step 16 may have an identifier that is read by the decoder at step 25 which then decides whether or not to pass the signal on to the attached luminary or display equipment 30.

In the case where Ethernet communications are employed to allow a response to be sent from the decoding luminary equipment 30, this employs the reverse of the process previously described, such that the information is passed via cable 28, through processes 27,26,25,24 into process 23, such that the data is thus sent through the power cabling system 30, to be processed back into Ethernet frames through process 18 then passed back up to the controlling device 10, through the processes of 18,17,16,15,14, and across cable 11.

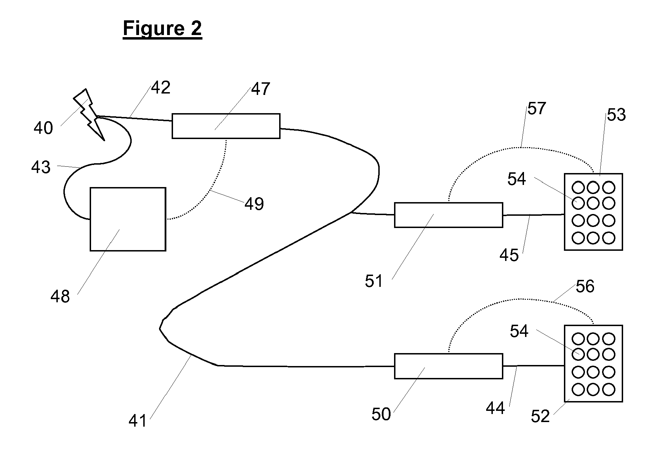

Figure 2 shows a schematic representation of an apparatus according to aspects of the present invention. A power distribution system fed by a power source 40 includes power transmission cables 41, 42, 43, 44 and 45. An encoder 47 equivalent to the encoder 12 previously discussed receives control data from a control unit 48 via a dedicated data output cable 49. The control unit 48 is supplied with electrical power by the power cable 43 and permits the input of control commands. Such control commands may be processed by a computer or other data processing equipment or directly activated by a user. The control signal generated by the controller 48 is multiplexed and modulated by the encoder 47 onto the signal on the power cable 41. This is transmitted to all parts of the power transmission network, and in this example is received by two different decoders 50 and 51. Each decoder is associated with a respective display device 52 and 53, which in this simplified representation has a grid of twelve LEDs 54. The decoders 51 and 50 allow power to reach the display units 52 and 53 via the power cables 44 and 45 respectively. A data output from the decoder 50 is connected by a display control lead 56 to the display device 52, and the decoder 51 is similarly connected by a second display control cable 57 to the display device 53.

The signal transmitted from the encoder 47 is received by both decoders 50 and 51. However, the control signal, if intended to only activate and control one of the display devices 52, includes an identifying sequence in the data which ensures that the signal is only fully processed and acted upon by the relevant decoder and display device. The relevant decoder demodulates the control signal from the power signal and translates that signal back into the proprietary format generated originally by the controller 48 and transmits it onward via the relevant control cable 56 or 57 to the display device, which operates accordingly drawing power from the distribution system.

Each decoder may be adapted to supply information back to the encoder 47 over the power cable 41 in an equivalent reverse process. This allows the provision of information from the slave unit to the controller. This might include operating parameters of the slave unit, or of the decoder. During initial set up the decoder may communicate with the encoder/controller to assign to the decoder specific addressing information.

The advantages of the present invention are previously discussed and clear modifications may be made within the scope of the present invention without departing from that which is protected.

## Claims

1. A method of transmitting control signals across a power circuit from a controller that generates a control signal to a slave unit that is connected to the power circuit and operates in response to the control signal, the method comprising the steps of:
a) receiving from the controller a control signal in any particular format;
b) translating that signal into an Ethernet format signal;
c) overlaying and modulating that Ethernet signal onto the power signal on the power circuit feeding the slave unit;
d) filtering and demodulating the Ethernet signal from the power signal received from the power circuit at a remote location;
e) translation of the Ethernet signal back to the format received at step a); and
f) transmission of the original format control signal by a separate circuit to the slave unit, thereby to control its operation.

2. A method as claimed in claim 1, wherein the format of the signal received in step a) and transmitted at step f) is selected from formats including DMX, ACN, RS232, RS485, PWM and PAM.

3. A method as claimed in any of the preceding claims, wherein the slave unit is a display or lighting device.

4. A method as claimed in any of the preceding claims, wherein an encoder unit is provided, which encoder is connected to the power circuit and the controller and which carries out steps a) to c).

5. A method as claimed in any of the preceding claims, wherein a decoder unit is provided, which decoder is connected to the power circuit and the slave unit and which carries out steps d) to e).

6. A method as claimed in any of the preceding claims, wherein additional data can be applied to the control signal by a manipulation of the control signal prior to step c), with appropriate decoding carried out in step d) to allow the additional control functionality.

7. A method as claimed in any of the preceding claims, wherein several slave units are on a common power circuit and the control signal includes an identifier specific one or more slave unit, to ensure that only the or each identified slave unit responds to those commands.

8. A method as claimed in claim 7, wherein the each slave unit may after installation be assigned an address to allow the direction of the specific identifier.

9. A method as claimed in any of the preceding claims, wherein the translated control signal is stored in a memory after step a) and or after step d).

10. A method as claimed in any of the preceding claims, wherein data may also be supplied by equivalent means in the reverse direction from the slave unit to the controller.

11. Apparatus for transmission of control signals across a power circuit from a controller that generates a control signal to a remote slave unit that is connected to the power circuit and operates in response to the control signal, the apparatus comprising:
- an encoder in or adjacent the controller having an input adapted to receive the control signal in a particular format; a translator that changes that signal into an Ethernet signal format, and a modulator that modulates and overlays that Ethernet signal onto the power signal of the power circuit connected thereto; and
- a decoder in or adjacent the slave unit that receives the power signal and includes a demodulator to filter and demodulate the Ethernet signal from the power signal; a translator that converts the Ethernet signal back to the same format as originally transmitted by the controller, and output means to transmit the original format control signal to the slave unit by means other than the power circuit, thereby to control its operation.

12. Apparatus as claimed in claim 11 wherein the decoder and or encoder are provided with a memory adapted to store the control signal.

13. Apparatus as claimed in claim 11 or claim 12, wherein the decoder is located within a slave unit.

14. Apparatus as claimed in claim 11 or claim 13, wherein one or more controller is adapted to control multiple slave units on the same power circuit.

15. Apparatus as claimed in claim 14, wherein a separate decoder is associated with each slave unit.

16. Apparatus as claimed in claim 14, wherein a decoder is associated with several slave units.

17. Apparatus as claimed in any of claims 11 to 16, wherein the encoder and decoder are equivalent units adapted to perform either or both functions as required.

18. Apparatus as claimed in any of claims 11 to 17, wherein the, or one or more of each, slave unit is a display or lighting device.

19. Apparatus as claimed in any of claims 11 to 18, wherein each decoder has a specific identifier, which is used ensure a control signal is relayed only to a slave unit connected to the specific decoder.

20. Apparatus as claimed in any of claim 20 where the specific identifier is assigned by the controller or encoder using communication over the power circuit.

21. An encoder-decoder for transmitting to a like device and receiving from a like device control data over a power circuit in which the encoder-decoder is connected, the encoder-decoder comprising an interface connector that connects to a controller to receive therefrom commands in a proprietary format or a slave unit to send thereto commands in a proprietary format; a translator subsystem that converts an incoming control signal from the proprietary format to an Ethernet format, or converts a control signal in an Ethernet format to a proprietary format; and a modulator demodulator that embeds Ethernet frames on the power circuit or decodes such Ethernet frames from the power circuit.

22. Apparatus as claimed in any of claims 11 to 21 wherein the slave unit can respond to a request from the controller via a modulated Ethernet frame over the power circuit.

23. Apparatus as claimed in any of claims 11 to 22 wherein the or each slave unit has an IP or MAC address, and each unit may be addressed individually by using a component or derivative thereof once this address has provided to the controller.
